(19) Europäisches Patentamt

European Patent Office

Office européen des brevets

(11) Veröffentlichungsnummer: **0 511 580 A2**

# (12) EUROPÄISCHE PATENTANMELDUNG

(21) Anmeldenummer: **92106861.5**

(51) Int. Cl.⁵: **D04B 27/32**

(22) Anmeldetag: **22.04.92**

(30) Priorität: **29.04.91 DE 4114012**

(43) Veröffentlichungstag der Anmeldung:
**04.11.92 Patentblatt 92/45**

(84) Benannte Vertragsstaaten:
**AT BE CH DE DK ES FR GB GR IT LI LU MC NL PT SE**

(71) Anmelder: **LIBA Maschinenfabrik GmbH
Oberklingensporn, Postfach 11 20
W-8674 Naila(DE)**

(72) Erfinder: **Hägel, Adolf, Dipl.-Ing. (FH)
Bobengrün 68
W-8675 Bad Steben(DE)**

(74) Vertreter: **Bardehle, Heinz, Dipl.-Ing. et al
Patent- und Rechtsanwälte
Bardehle-Pagenberg-Dost-Altenburg-Frohwitter-Geisler & Partner Postfach 860620
W-8000 München 80(DE)**

(54) **Kettenwirkmaschine mit auf einer Legebarre angebrachten individuell bewegbaren Fadenführern.**

(57) Kettenwirkmaschine mit mindestens einer Legebarre, auf der einzelne Fadenführer individuell in Versatzrichtung hin- und herbewegbar angebracht sind, die zu einer oder mehreren Gruppen zusammengefaßt sind und gruppenweise jeweils von einem gemeinsamen Musterungsantrieb bewegt werden.

Die Musterungsantriebe sind als von einer Programmsteuerung elektrisch gesteuerte, von der Legebarre unabhängig gelagerte Stellmotoren ausgebildet, die über unter Spannung gehaltene Zugsteuerseile mit den Fadenführern verbunden sind.

Fig. 1

Die Erfindung bezieht sich auf eine Kettenwirkmaschine mit mindestens einer Legebarre, auf der einzelne Fadenführer individuell in Versatzrichtung hin- und herbewegbar angebracht sind, die zu einer oder mehreren Gruppen zusammengefaßt sind und gruppenweise jeweils von einem gemeinsamen Musterungsantrieb bewegt werden.

Eine derartige Kettenwirkmaschine ist aus der DE-PS 27 06 974 bekannt. Eine solche Kettenwirkmaschine ermöglicht die Musterung von Kettenwirkare, die zwar gegenüber der uneingeschränkten Musterungsmöglichkeit mittels einer Jacquard-Steuerung einschränkt ist, da nicht sämtliche Fadenführer individuell bewegbar sind, jedoch reicht die gruppenweise von einem gemeinsamen Muste-rungsantrieb erfolgende Bewegung der Fadenfüh-rer einer Gruppe für eine große Anzahl von gewünschten Mustern aus. Aufgrund der gruppenweise erfolgenden Zusammenfassung der Fadenführer mit gruppenweise gemeinsamem Musterungsantrieb ergibt sich eine wesentliche Vergrößerung der Arbeitsgeschwindigkeit der betreffenden Kettenwirkmaschine gegenüber einer solchen mit einer Jacquard-Steuerung, damit eine erhebliche Einsparung an Aufwand.

Aus der vorstehend genannten Druckschrift ist hinsichtlich des Antriebs der Fadenführer nur zu entnehmen, daß innerhalb einer Gruppe von Fadenführern diese von gemeinsamen Schubstangen hin- und herbewegt werden, an denen die als doppelarmige Hebel ausgebildeten Fadenführer einzeln angelenkt sind. Bezüglich des Antriebs für die Schubstangen enthält die Druckschrift keine konkreten Hinweise. Es ist nur der in der Druckschrift angegebenen DE-PS 277 378 und der DE-OS 26 01 899 zu entnehmen, daß Schubstangen durch eine Jacquard-Steuerung bzw. die Glieder einer Musterkette hin- und herbewegt werden.

Eine gruppenweise Bewegung einzelner Fadenführer ist weiterhin in der DE-OS 38 00 381 beschrieben. Bei dieser bekannten Gestaltung ei-ner Kettenwirkmaschine sind die Musterungsantrie-be zusammen mit den individuell hin- und herbewegbaren Fadenführern auf den betreffenden Legebarren angebracht, d. h., die Masse jeder Legebarre ist um den Musterungsantrieb vergrößert, was einer wünschtenswerten schnellen Bewegung der Legebarren im Sinne einer hohen Leistungsfähigkeit der Kettenwirkmaschine einen entsprechenden Trägheitswiderstand entgegensetzt.

Der Erfindung liegt die Aufgabe zugrunde, die Arbeitsgeschwindigkeit der eingangs erläuterten Kettenwirkmaschine bei geringem Platzbedarf und schneller Anpassung an Musteränderungen weiterhin zu erhöhen. Erfindungsgemäß geschieht dies dadurch, daß die Musterungsantriebe als von einer Programmsteuerung elektrisch gesteuerte, von der Legebarre unabhängig gelagerte Stellmotoren ausgebildet sind, die über unter Spannung gehaltene Zugsteuerseile mit den Fadenführern verbunden sind.

Aufgrund der Verwendung der mit den Fadenführern verbundenen Zugsteuerseile ergibt sich einerseits eine geringe Massenträgheit für diesen Teil des Antriebs der Fadenführer, andererseits ein geringer Platzbedarf, wobei die Zugsteuerseile wegen der ihnen innewohnenden Flexibilität beliebige Umlenkungen und damit eine Anpassung der Lage der elektrischen Stellmotoren an die konstruktiven Gegebenheiten einer Kettenwirkmaschine ermöglichen. Aufgrund der geringen Massenträgheit läßt sich die Arbeitsgeschwindigkeit der betreffenden Kettenwirkmaschine entsprechend erhöhen. Dabei läßt die Verwendung der die Zugsteuerseile hin-und herziehenden elektrischen Stellmotoren eine schnelle Anpassung der betreffenden Kettenwirkmaschine an sich ändernde Musterungen zu, da derartige Stellmotoren in der Lage sind, in bekannter Weise von einer Steuerschaltung gelieferte Signale mit hoher Geschwindigkeit zu verarbeiten, wobei die Steuerung sich problemlos und schnell auf andere Musterungen umstellen läßt.

Der geringe Platzbedarf in Verbindung mit dem geringen Bauaufwand und der räumlichen Anpassungsfähigkeit der gesamten Anordnung von Zugs-teuerseilen und elektrischen Stellmotoren ermög-licht eine Nachrüstung von mehrbarrigen Kettenwirkmaschinen, bei denen lediglich mindestens eine Legebarre mit den zu Gruppen zusammenge-faßten individuell bewegbaren Fadenführern auszu-statten ist. Gegebenenfalls kann diese Anpassung durch Auswechselung einer oder mehrere Legebarren geschehen.

Bei der erfindungsgemäß gestalteten Kettenwirkmaschine kann man entweder nur eine oder auch mehrere Legebarren mit zu Gruppen zusammengefaßten individuell bewegbaren Fadenführern ausstatten, wodurch sich eine entsprechende Varia-tionsbreite hinsichtlich der Mustermöglichkeit er-gibt. Da nun die erfindungsgemäß gestalteten Legebarren hinsichtlich des Antriebs der bewegbaren Fadenführern besonders raumsparend und hinsichtlich der Gesamtanordnung anpassungsfähig gestaltet sind, besteht die Möglichkeit, im Bedarfsfall eine erfindungsgemäße Legebarre durch eine normale voll besetzte Legebarre auszutauschen und umgekehrt, wodurch sich der Betrieb der betreffenden Kettenwirkmaschine in einfacher Weise an die verschiedensten Bedürfnissituationen anpassen läßt.

Die Zugsteuerseile kann man dadurch unter Spannung halten, daß man sie mit ihrer den Stellmotoren abgewandten Seite an Zugfedern anhängt. Es ist aber auch möglich, die Zugsteuerseile von den Stellmotoren zu den Fadenführern (Hinführung) und von diesen zurück über eine Umlenkung zu den Stellmotoren (Rückführung) zu führen, wobei die Stellmotoren die Hinführung und Rückführung jeweils in gleicher Länge bewirken. Bei der letzteren Gestaltung brauchen die Stellmotoren die Kraft einer Zugfeder nicht überwinden, so daß sie entsprechend schneller bewegt werden können. Damit kommt man auch mit Stellmotoren geringerer Leistung aus.

Im Falle einer Gestaltung der Zugsteuerseile mit Hinführung und Rückführung besteht die Möglichkeit, einzelne Fadenführer mit der Hinführung und die anderen Fadenführer mit der Rückführung der Zugsteuerseile zu verbinden. In diesem Falle läßt sich auf einfache Weise eine spiegelbildliche Musterung erzielen.

Um eine Beeinflußung der Bewegung der Zugsteuerseile aufgrund der Verschwenkbewegung der Legebarren und gegebenenfalls von deren Versatzbewegung zu verhindern, gibt man den Zugsteuerseilen zweckmäßig eine solche Führung, daß die Zugsteuerseile zum Musterantrieb hin etwa rechtwinklig zur Versatzrichtung der Legebarre umgelenkt sind, wobei der umgelenkte Bereich der Zugsteuerseile neben der Stirnseite der Achse der Legebarrenschwenkwelle verläuft und im wesentlichen die Fluchtlinie dieser Achse schneidet. Die besonderen Bewegungen der Legebarre können sich dann auf die Zugsteuerseile praktisch nicht auswirken.

Für das Einziehen der zu verwirkenden Fäden in die Fadenführer werden die Legebarren in üblicher Weise aus ihrer normalen Lagerung ausgehängt und, in Abstand von den anderen Barren, eingehängt, um damit die ausgehängte Legebarre für das Einziehen der Fäden gut zugänglich zu machen. Dies läßt sich unter Berücksichtigung des Vorhandensein der Zugsteuerseile dadurch erleichtern, daß den Stellmotoren jeweils eine Umlenkung für die Zugsteuerseile vorgeordnet ist und die Lagerung der Umlenkung zwecks Freigabe der Zugsteuerseile auslösbar ist. Zum Aushängen der betreffenden Legebarre werden die Zugsteuerseile freigegeben, die dabei ohne weiteres durchhängen können, womit der betreffenden Legebarre die Freiheit zum Einhängen an einer zugänglichen Lage gegeben wird. Vorteilhaft wird die lösbare Lagerung mit einer Spannvorrichtung für das betreffende Zugsteuerseil versehen, so daß mit dem gleichen Bauteil die Freigabe der Zugsteuerseile als auch deren notwendige Spannung herbeigeführt werden kann.

Um die erfindungsgemäße Gestaltung der Antriebe für die individuell bewegbaren Fadenführer auch bei Kettenwirkmaschinen besonders hoher Feinheit einsetzbar zu machen, gestaltet man den Antrieb zweckmäßig so, daß die Verbindung von Zugsteuerseil und Fadenführer einen Federstab enthält und zur Begrenzung der Hin-und Herbewegung der Fadenführer Anschläge an der Legebarre angebracht sind. Durch die Anschläge wird dann die Hin- und Herbewegung der Fadenführer exakt begrenzt, ohne daß von den Stellmotoren eine entsprechende Positioniergenauigkeit verlangt werden muß.

In den Figuren sind Ausführungsbeispiele der Erfindung dargestellt. Es zeigen:

Figur 1     die Legebarre einer Kettenwirkmaschine mit einer Gruppe von in Versatzrichtung hin- und herbewegbaren Fadenführern, die von umlaufenden Zugsteuerseilen gelegt werden,

Figur 2     eine in gleicher Weise aufgebarrte Legebarre, bei der die Zugsteuerseile an Zugfedern aufgehängt sind,

Figur 3     einen Ausschnitt aus einer Legebarre mit einer Gruppe von hin- und herbewegbaren Fadenführern, die über Federstäbe bewegt werden.

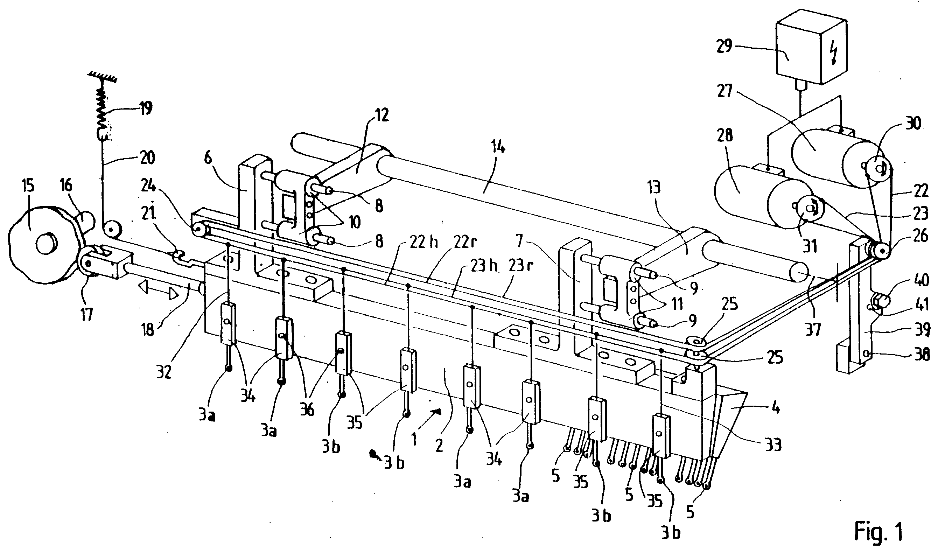

Die in der Figur 1 dargestellte Legebarre 1 einer Kettenwirkmaschine besteht hier aus dem Träger 2 für die in Versatzrichtung hin- und herbewegbaren, als Lochnadeln ausgebildeten Fadenführer 3 und den Träger 4 für an diesem Stab angebrachte, ebenfalls aus Lochnadeln ausgebildete Fadenführer 5. Die beiden Träger 3 und 4 sind fest miteinander verbunden, so daß bei der Schwingbewegungen der Legebarre 1 die Fadenführer 3 und 5 gemeinsam durch die Nadelgassen der Wirknadeln der betreffenden Kettenwirkmaschine hindurchschwingen. Auf die Darstellung der Wirknadeln wurde bei der Gestaltung der Figur 1 verzichtet, da die Zusammenarbeit zwischen Wirknadeln und Fadenführern einer Kettenwirkmaschine eine seit Bestehen von Kettenwirkmaschinen bekannte Funktion ist. Aus diesem Grunde wurden auch weitere in diesem Zusammenhang nicht interessierende Organe einer Kettenwirkmaschine weggelassen.

Die Legebarre 1 hängt an den beiden Tragarmen 6 und 7, aus denen die Führungsbolzen 8 und 9 herausragen, die in Axialführungslagern 10 und 11 gehalten sind. Aufgrund dieser Lagerung kann die Legebarre 1 in ihrer Längsrichtung hinund herbewegt werden, woraufhin weiter unten noch näher eingegangen wird. Die Axialführungslager 10 und 11 sind an den Schwenkarmen 12 und 13 befestigt, die auf der Legebarrenschwenkwelle 14 drehfest gelagert sind. Die Legebarreschwenkwelle 14 wird in bekannter Weise vom Antrieb der Kettenwirkmaschine um ihre Achse hin- und herbewegt, wodurch den Fadenführern 3 und 5 die oben erwähnte Schwenkbewegung zum Durchschwingen durch die Nadelgassen gegeben wird. Hierbei handelt es sich ebenfalls um eine bekannte Funktion.

Die Legebarre 1 wird außerdem in der sogenannten Versatzrichtung, d. h. in ihrer Längsrichtung, eine Hin- und Herbewegung aus, die der Lagebarre 1 mittels der Kurvenscheibe 15 aufgedrückt wird. Bei der Drehung der Kurvenscheibe 15 um ihre Achse 16 drückt die Kurvenscheibe die Rolle 17 hin und her, wobei die Rolle 17 ihre Bewegung in Versatzrichtung auf den Stösel 18 und damit auf die Legebarre 1 überträgt diese Hin- und Herbewegung in Versatzrichtung ist durch den Doppelpfeil am Stösel 18 angedeutet. Damit nun die Rolle 17 stets in Berührungskontakt mit der Kurvenscheibe 15 steht, wird die Legebarre 1 über die Feder 19, das Zugseil 20 und den Haken 21 in Richtung auf die Kurvenscheibe 15 gezogen. Aufgrund der Hin- und Herbewegung der Legebarre 1 in Versatzrichtung führen die Fadenführer 3 und 5 den Vorgang des Durchschwingens durch die Nadelgassen jeweils in verschiedene Nadelgassen aus, wodurch sich das jeweils erwünschte Erscheinungsbild der gewirkten Ware ergibt. Dabei führen die Fadenführer 5 diejenigen Legungen aus, die im wesentlichen die herzustellende Ware gestalten. Die Fadenführer 5 sind daher über die gesamte Länge der Legebarre 1 angeordnet.

Wie die Figur 1 zeigt, sind in der Reihe der Fadenführer 5 Lücken gelassen, die von den Fadenführern 3 ausgefüllt sind. Wenn die Fadenführer 5 und 3 in ihrer dargestellten Lage ständig gehalten werden, so ergibt sich ein gleichmäßiges Maschenbild der herzustellenden Ware über deren gesamte Breite.

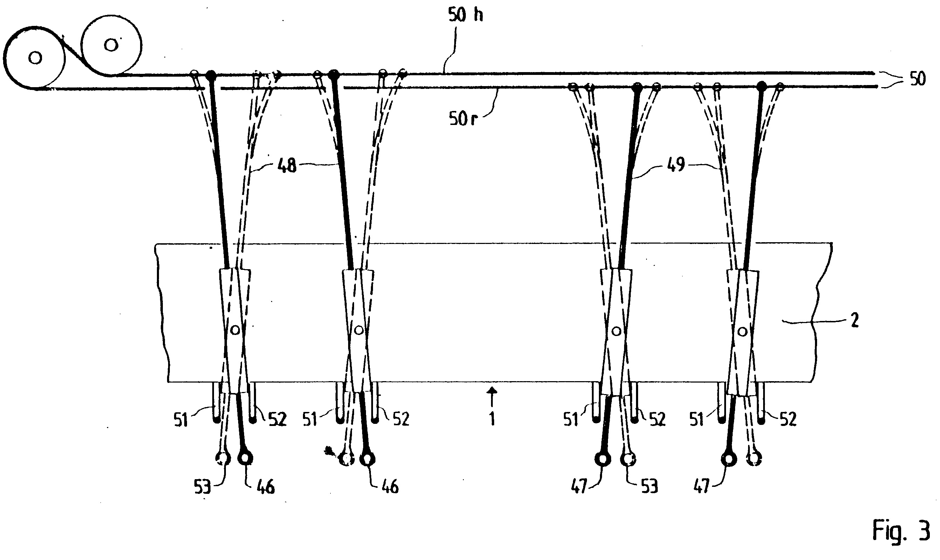

Die Fadenführer 5 bilden eine Gruppe, innerhalb der sämtliche Fadenführer 5 in Versatzrichtung hin- und herbewegt werden können. Bei dieser Hin- und Herbewegung gehen die Fadenführer 5 aus einer Normallage in eine Musterungslage über und zurück, wie in Zusammenhang mit der Figur 3 näher erläutert wird. In der Normallage, wie sie in Figur 1 gezeigt ist, werden die von den FAdenführern 3 gelegten Fäden gleichmäßig zwischen die von den Fadenführern 5 gelegten Fäden gelegt, so daß sich damit das vorstehend erwähnte gleichmäßige Maschenbild ergibt.

Um in die von den Fadenführern 5 im wesentlichen gewirkte Grundware ein Muster einzubringen, werden die Fadenführer 3 aus ihrer Normallage in die Musterungslage bewegt, und zwar in Versatzrichtung der Legebarre 1. Diese Bewegung wird den Fadenführern 3a und 3b mittels der Zugsteuerseile 22 und 23 erteilt, die als Endlosseil geführt sind. Dabei bilden die Teile 22h und 23h jeweils die Hinführung und die Teile 22r und 23r die Rückführung des betreffenden Zugsteuerseils. Die Zugsteuerseile 22 und 23 sind am kurvenscheibenseitigen Ende der Legebarre 1 über Umienkrollen 24 geführt. Sie werden dann nochmals durch die Umlenkrollen 26 umgelenkt, und zwar das Zugsteuerseil 22 zum elektrischen Stellmotor 27 und das Zugsteuerseil 23 zum elektrischen Stellmotor 28. Diese elektrischen Stellmotore 27 und 28 werden von einer in Synkronismus mit den sonstigen Bewegungen der Kettenwirkmaschine gehaltenen Programmsteuerung 29 gesteuert, und zwar derart, daß die Stellmotore 27 und 28 ihre Antriebsräder 30 und 31 hin- und herdrehen, wodurch den Zugsteuerseilen 22 und 23 im Bereich ihrer Hinführung 22h und 23h eine entsprechende Hin- und Herbewegung in Versatzrichtung aufgedrückt wird. Diese Hin- und Herbewegung der Hinführungen 22h und 23h wird nun auf die an diesen Hinführungen befestigten Hebel 32 und 33 übertragen, die den an ihnen angebrachten Fadenführernhaltern 34 und 35 eine entsprechende Verschwenkbewegung erteilen. Die Fadenführerhalter 34 und 35 sind für diesen Zweck auf Achsen 36 an dem Träger schwenkbar gelagert. Die Fadenführer 3a und 3b führen somit entsprechend der Hin- und Herbewegung der Hinführungen 22h und 23h eine entsprechende Hin- und Herbewegung aus, bei der Fadenführer 3a und 3b aus ihrer Normallage in die Musterungslage und zurück gelangen.

Da nun die Fadenführer 3a vom Zugsteuerseil 22 und die Fadenführer 3b vom Zugsteuerseil 23 hin- und herbewegt werden, ergibt sich, mittels der beiden getrennt steuerbaren Stellmotoren 27 und 28 die Möglichkeit, die beiden Gruppen von Fadenführern 3a und 3b unterschiedlich hin- und her zu bewegen, womit sich eine entsprechende Variation in der Musterung erzielen läßt. Wenn weitere Variationen hinsichtlich der Musterung gewünscht werden, dann sind entsprechend mehr Stellmotoren und Zugsteuerseile und mit von ihnen gesteuerten Fadenführern vorzusehen.

Der in Fig. 1 dargestellte Träger 4 mit seinen daran befestigten Fadenführern 5 kann auch unabhängig vom Träger 3 separat in eigenen Tragarmen 6 und 7 und Führungsbolzen 8 und 9 mit den dazugehörigen Axiallagern 10 und 11 gelagert sein. Er ist in diesem Falle auch durch eine separate Kurvenscheibe 15 in Versatzrichtung steuerbar. Wegen der Übersichtlichkeit ist diese separate Lagerung in Fig. 1 nicht mit dargestellt.

Der Betätigungsmechanismus für die in Figur 1 dargestellten beiden Gruppen von Fadenführern 3a und 3b besteht im wesentlichen aus dem betreffenden Zugsteuerseil 22 bzw. 23 und den beiden Stellmotoren 27 und 28, wobei den Stellmotoren 27 und 28 keine große Energie für die Hin- und Herbewegung der Zugsteuerseile 22 und 23 sowie der von diesen gesteuerten Fadenführern 3a und 3b abverlangt wird, da es sich bei diesen Organen um relativ leichte Bauteile handelt. Dies hat einen entsprechenden günstigen Einfluß auf die Bewegungsgeschwindigkeit der Legebarre 1, die entsprechend hoch sein kann.

Um nun aufgrund der oben erläuterten Bewegung der Legebarre 1 (Versatzbewegung und Schwenkbewegung um die Achse 14) die beweglich angeordneten Fadenführer 3a und 3b so wenig wie möglich zu beeinflußen, sind die Zugsteuerseile 22 und 23 um die Umlenkrollen 25 geführt, wobei sie im Bereich zwischen den Umlenkrollen 25 und 26 die Fluchtlinie 37 der Achse 14 im wesentlichen schneiden. Bei der Versatzbewegung der Legebarre 1 ergibt sich aufgrund dieser Führung der Zugsteuerseile 22 und 23 praktisch keine Längenänderung im Bereich zwischen den Umlenkrollen 25 und 26, so daß die Fadenführer 3a und 3b aufgrund der Versatzbewegung der Legebarre 1 praktisch keine Verschwerkbewegung um die Achsen 36 ausführen. Entsprechendes gilt für die Schwenkbewegung der Legebarre um die Achse 14. Bei dieser Schwenkbewegung werden die Zugsteuerseile 22 und 23 im Bereich zwischen den Umlenkrollen 25 und 26 mitbewegt, ohne das sich dabei eine ins Gewicht fallende Längenänderung im Bereich der Zugsteuerseile ergibt. Diese Verschwenkbewegung wirkt sich in gleicher Weise auf die Hinführung 22h bzw. 23h und auf die Rückführung 22r bzw. 23r aus, so daß die Zugsteuerseile 22 und 23 überhaupt nicht in ihrer Längsrichtung verschoben werden können. Eine Längenänderung im Bereich zwischen den Umlenkrollen 25 und 26 tritt, wie gesagt, praktisch nicht ein, so däß also die beiden Zugsteuerseile 22 und 23 ihre eingestellte Spannung beigehalten.

Die Umkenkrollen 26 sind am Ende des drehbeweglich auf der Achse 38 gelagerten Lenkers 39 gelagert. Mit der Verschwenkung des Lenkers 39 kann die Spannung in den Zugsteuerseilen 22 und 23 entsprechend verringert oder vergrößert werden. Die jeweils gewünschte Spannung läßt sich dadurch einstellen, daß die Fixierschraube 40, unter der das Langloch 21 im Lenker 39 angeordnet ist gegen den Lenker 39 angezogen. Je nach Stellung der Fixierschraube 40 in bezug auf das Langloch 41 läßt sich also die Spannung der beiden Zugsteuerseile 22 und 23 einstellen. Um die Legebarre zum Zwecke des Fadeneinzugs herausnehmen zu können, werden die Zugsteuerseile 22 und 23 freigegeben, wozu der Lenker 39 nach Lösen der Fixierschraube 40 in Richtung auf die Umlenkrollen 25 verschwenkt wird, wodurch die Zugsteuerseile 22 und 23 freigegeben werden und die Legebarre 1 dann aus ihrer Lagerung in bekannter Weise herausgenommen werden kann.

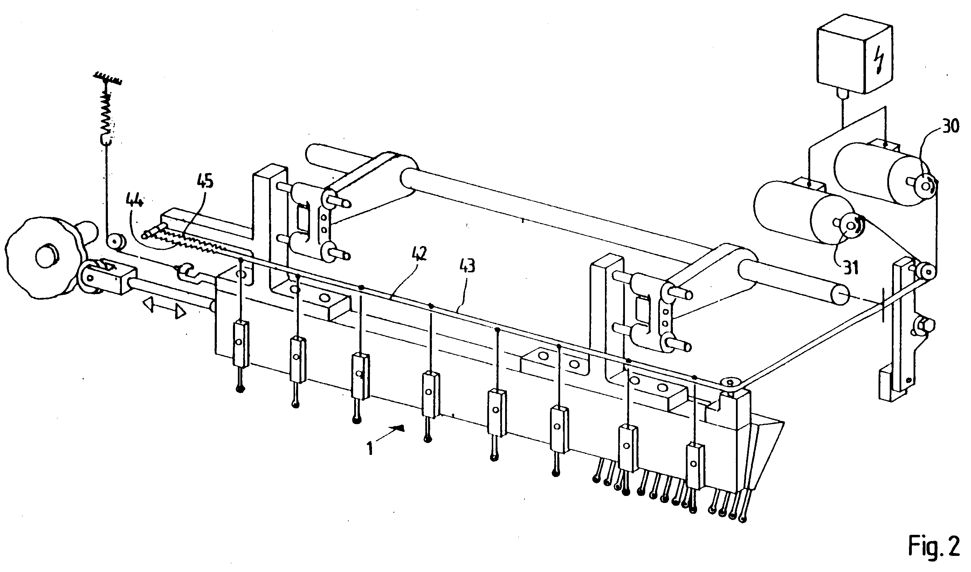

Die in der Figur 2 dargestellte Legebarre 1 entspricht hinsichtlich ihrer Lagerung und Steuerung vollständig derjenigen gemäß Figur 1, so daß diesbezüglich auf die Erläuterung zu Figur 1 verwiesen werden kann. Bei der Anordnung gemäß Figur 2 ist lediglich eine andere Führung der beiden Zugsteuerseile 42 und 43 vorgesehen. Es handelt sich hier nicht um Endloszugsteuerseile wie bei der Anordnung gemäß Figur 1, sondern um Zugsteuerseile, die auf ihrer einen Seite durch die Zugfedern 44 und 45 gespannt werden und auf ihrer anderen Seite von den Antriebsrädern 30 und 31 auf- und abgewickelt werden. Dabei führen die Zugsteuerseile 42 und 43 wie die Hinführungen 22h und 23h gemäß Figur 1 eine Hin- und Herbewegung in Versatzrichtunng aus, wodurch wie bei der Anordnung gemäß Figur 1 die Fadenführer 3a und 3b entsprechend hin- und herbewegt werden. Ansonsten entspricht die Anordnung gemäß Figur 2 vollständig der Figur 1.

In der Figur 3 ist der Träger 2 der Legebarre 1 allein dargestellt, und zwar mit zwei Gruppen von hin- und herbewegbaren Fadenführern 46 und 47. Die Fadenführer 46 und 47 sind wie bei den Anordnungen gemäß Figur 1 und Figur 2 am Träger 2 gelagert. Allerdings bestehen bei der Anordnung gemäß Figur 3 die Stäbe 48 und 49 aus biegsamen Material, es handelt sich also um Federstäbe, die bei der Hin- und Herbewegung des Zugsteuerseils 50 entsprechend ausgelenkt werden. Für die Hin- und Herbewegung der Fadenführer 46 und 47 sind die Anschläge 51 und 52 vorgesehen, wobei die Fadenführer 46 und 47 in der mit vollen Linien dargestellten Lage die Normallage einnehmen, während die Musterungslage durch die gestrichelten Linien dargestellt ist (Bezugszeichen 53). Aufgrund dieser Anschläge 51 und 52 wird bei der Hin- und Herbewegung des Zugsteuerseils 50 dem Fadenführer 46 und 47 jeweils eine definierte Endlage gegeben, so daß bezüglich der Nadelgassen, durch die die Fadenführer 46 und 47 hindurchgeschwenkt werden, eindeutige Verhältnisse vorliegen. Das Zugsteuerseil 50 kann dabei ohne weiteres geringfügig ohne enge Toleranz einen gewissen Überhub aufweisen, der dann durch eine entsprechende Verbiegung der Fäderstäbe 48 und 49 aufgefangen wird. Die Steifigkeit der Federstäbe 48 und 49 muß dabei so gewählt sein, daß die von den Fäden auf die Fadenführer 46 und 47 ausgeübten Kräfte von den Federstäben 48 und 49 voll aufgefangen werden, d. h. das die Fadenführer 46 und 47 in ihren durch die Anschläge 51 und 52 definierten Lagen unter der Spannung der Federstäbe 48 und 49 an den Anschlägen gehalten werden.

In der Figur 3 ist noch eine Besonderheit für die Musterung dargestellt, nämlich die Anbindung der Federstäbe 48 an der Hinführung 50h und die Anbindung der Federstäbe 49 an die Rückführung 50r. Hierdurch ergibt sich der Gruppe mit den Fadenführern 46 gegenüber mit der Gruppe mit den Fadenführern 47 eine ihrer spiegelbildliche Musterung, wie sie für viele Zwecke gewünscht wird. Für diese Art der spielgelbildlichen Musterung ist dann nur ein für die Bewegung des Zugsteuerseils 50 zuständiger Stellmotor erforderlich.

**Patentansprüche**

1.  Kettenwirkmaschine mit mindestens einer Legebarre (1), auf der einzelne Fadenführer (3,46,47) individuell in Versatzrichtung hin- und herbewegbar angebracht sind, die zu einer oder mehreren Gruppen zusammengefaßt sind und gruppenweise jeweils von einem gemeinsamen Musterungsantrieb bewegt werden, **dadurch gekennzeichnet,** daß die Musterungsantriebe als von einer Programmsteuerung (29) elektrisch gesteuerte, von der Legebarre (1) unabhängig gelagerte Stellmotoren (27,28) ausgebildet sind, die über unter Spannung gehaltene Zugsteuerseile (22,23; 42,43; 50) mit den Fadenführern (3,46,47) verbunden sind.

2.  Kettenwirkmaschine nach Anspruch 1, **dadurch gekennzeichnet,** daß die Zugsteuerseile (42,43) mit ihrer den elektrischen Stellmotoren (27,28) abgewandten Seite an Zugfedern (44,45) angehängt sind.

3.  Kettenwirkmaschine nach Anspruch 1, **dadurch gekennzeichnet,** daß die Zugsteuerseile (22,23) von den elektrischen Stellmotoren (27,28) zu den Fadenführern (3) (Hinführung 22h,23h) und über eine Umlenkung (24) von diesen zurück zu den elektrischen Stellmotoren (27,28) (Rückführung 22r, 23r) geführt sind, wobei die elektrischen Stellmotoren (27,28) die Hinführung (22h,23h) und die Rückführung (22r,23r) jeweils in gleicher Länge bewirken.

4.  Kettenwirkmaschine nach Anspruch 3, **dadurch gekennzeichnet,** daß einzelne Fadenführer (46) mit der Hinführung (50h) und die anderen Fadenführer (47) mit der Rückführung (50r) der Zugsteuerseile (50) verbunden sind.

5.  Kettenwirkmaschine nach einem der Ansprüche 1 bis 4, **dadurch gekennzeichnet,** daß die Zugsteuerseile (22,23) etwa rechtswinklig zur Versatzrichtung der Lagebarre (1) zum Musterungsantrieb (27,28) hin umgelenkt sind, wobei der umgelenkte Bereich der Zugsteuerseile (22,23) neben der Stirnseite der Achse der Legebarrenschwenkwelle (14) verläuft und im wesentlichen die Fluchtlinie (37) dieser Achse schneide t.

6.  Kettenwirkmaschine nach einem der Ansprüche 1 bis 5, **dadurch gekennzeichnet,** daß den Stellmotoren (27,28) jeweils eine Umlenkung (26) für die Zugsteuerseile (22,23) vorgeordnet ist und die Lagerung (39) der Umlenkung (26) zwecks Freigabe der Zugsteuerseile (22,23) lösbar ist.

7.  Kettenwirkmaschine nach Anspruch 6, **dadurch gekennzeichnet,** daß die Lagerung (39) mit einer Spannvorrichtung (40,41) für das betreffende Zugsteuerseil (22,23) versehen ist.

8.  Kettenwirkmaschine nach einem der Ansprüche 1 bis 7, **dadurch gekennzeichnet,** daß die Verbindung von Zugsteuerseil (50) und Fadenführer (46,47) einen Federstab (48,49) enthält und zur Begrenzung der Hin- und Herbewegung der Fadenführer (46,47) Anschläge (51,52) an der Legebarre (1) angebracht sind.

Fig. 1

EP 0 511 580 A2

Fig. 2

Fig. 3

50 h

50

50 r

48

49

2

1

51 52 51 52 51 52 51 52

53 46 46 47 53 47

EP 0 511 580 A2

9